(19) Europäisches Patentamt
European Patent Office
Office européen des brevets

(11) EP 2 512 785 B1

(12) # FASCICULE DE BREVET EUROPEEN

(45) Date de publication et mention de la délivrance du brevet:
**31.07.2019 Bulletin 2019/31**

(21) Numéro de dépôt: **10794961.2**

(22) Date de dépôt: **14.12.2010**

(51) Int Cl.:
***B29C 70/48*** (2006.01) ***C08L 77/00*** (2006.01)

(86) Numéro de dépôt international:
**PCT/EP2010/069648**

(87) Numéro de publication internationale:
**WO 2011/073198 (23.06.2011 Gazette 2011/25)**

(54) **PROCEDE DE FABRICATION D'ARTICLES COMPOSITE A BASE DE POLYAMIDE**

VERFAHREN ZUR HERSTELLUNG VON POLYAMIDVERBUNDARTIKELN

METHOD FOR MANUFACTURING POLYAMIDE COMPOSITE ITEMS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.12.2009 FR 0958939**

(43) Date de publication de la demande:
**24.10.2012 Bulletin 2012/43**

(73) Titulaire: **Rhodia Operations**
**93306 Aubervilliers (FR)**

(72) Inventeurs:
- **JEOL, Stéphane**
**F-69006 Lyon (FR)**
- **ORANGE, Gilles**
**F-69390 Vourles (FR)**

(74) Mandataire: **Benvenuti, Federica et al**
**Solvay S.A.**
**Département de la Propriété Intellectuelle**
**Rue de Ransbeek, 310**
**1120 Bruxelles (BE)**

(56) Documents cités:
**WO-A1-2005/000963** **WO-A1-2008/155318**
**FR-A- 1 116 870**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Printed by Jouve, 75001 PARIS (FR)

## Description

La présente divulgation concerne l'utilisation de polyamide de haute fluidité servant à l'imprégnation de matériaux de renfort prenant la forme d'étoffe de tissus industriels pour la fabrication de matériaux composites. Le domaine de la divulgation est celui des matériaux composites ainsi que les procédés de moulage liquide LCM ainsi que les pièces obtenues. L'invention concerne plus particulièrement un procédé de fabrication d'un article composite polyamide par moulage par injection comprenant au moins les étapes d'introduction d'au moins une étoffe de renfort dans un moule préchauffé, une étape de montée en température du moule, éventuellement une étape de maintien en température du moule avant injection d'une composition polyamide, une étape d'injection d'une composition polyamide à l'état fondu dans le moule permettant l'écoulement de la résine à travers l'étoffe de renfort, une étape de refroidissement et une étape de récupération de l'article composite obtenu, comme définit par la revendication 1.

## ART ANTERIEUR

Dans le domaine des matériaux hautes-performances, les composites ont pris une place prépondérante, de par leurs performances et les gains de poids qu'ils autorisent. Les composites hautes performances les plus connus à ce jour, sont obtenus à partir de résines thermodurcissables, dont l'utilisation est limitée aux applications de faibles à moyennes séries, principalement dans l'aéronautique, le sport automobile, et présentant des temps de fabrication allant de quelques dizaines de minutes dans les meilleurs cas à plusieurs heures. Le coût de ces matériaux, et/ou les temps de fabrication, les rendent difficilement compatibles avec un usage en grande série. De plus, l'utilisation de résines thermodurcissables implique souvent la présence de solvants et de monomères. Enfin, ces composites sont difficilement recyclables.

Les polymères thermoplastiques présentent un certain nombre d'avantages par rapport aux thermodurs, ce qui permet de les envisager comme des opportunités très intéressants pour le développement de structures composites, notamment sur des marchés de masse comme l'automobile, l'énergie, les sports et loisirs ou des marchés plus limités mais en développement comme l'aéronautique. Parmi ces avantages, on citera entre autres de bonnes performances mécaniques intrinsèques, notamment la ductilité, la tenue aux chocs et la fatigue, une bonne stabilité chimique, notamment aux solvants, et une recyclabilité totale pour des pièces injectées performantes.

Le développement des articles à base thermoplastiques en renfort continu est actuellement limité notamment par des problèmes de procédés, notamment de couts. En effet, les polymères disponibles sur le marché présentent une haute viscosité à l'état fondu, typiquement supérieure à 200 Pa.s, ce qui rend difficile l'imprégnation des tissus et surtout lorsque le taux de fibres devient important, notamment lorsqu'il est supérieur à 50 % en volume. Il résulte de l'emploi des matrices thermoplastiques disponibles sur le marché, une difficulté d'imprégnation nécessitant soit des temps d'imprégnation prolongés, soit des pressions de mise en oeuvre importantes ce qui pose certains problèmes avec les pièces de grandes dimensions. Dans la majeure partie des cas, les matériaux composites obtenus à partir de ces matrices peuvent présenter des microvides et des zones mal imprégnées. Ces microvides causent des chutes de propriétés mécaniques, un vieillissement prématuré du matériau ainsi que des problèmes de délaminage lorsque le matériau se compose de plusieurs couches de renforts. Ce phénomène de perte de propriétés mécaniques est par ailleurs accentué lorsque les temps de cycle pour la fabrication des articles composites diminuent. Le niveau élevé de viscosité de ces polymères impose des limites en ce qui concerne les technologies de mise en forme, et ne permet pas la réalisation de pièces présentant des géométries complexes.

Pour pallier ce problème de viscosité, diverses approches sont développées. On peut citer :

- des technologies de comélages (commingling) ou d'imprégnation (coating) de mèches, le polymère étant positionné au plus près du renfort afin d'obtenir des consolidations correctes ;
- le recours à des monomères à faible viscosité (par exemple caprolactame, laurylactame, résine CBT) avec polymérisation in-situ dans le renfort après imprégnation.

Le document WO2008155318 décrit l'utilisation de polyamides de haute fluidité pour imprégner des matériaux de renfort afin de fabriquer des matériaux composites.

Ces approches présentent cependant un certain nombre d'inconvénients que ce soit en terme de processabilité, de performances finales ou encore de coût qui limitent leur application notamment pour des marchés de masse.

L'objectif de la présente invention est donc de remédier à ces inconvénients en proposant un article composite qui puisse être fabriqué avec des temps de cycle courts tout en ayant de bonnes propriétés d'usage, telles que de bonnes propriétés mécaniques. Un autre objectif est aussi de proposer des articles composites pouvant présenter des formes relativement complexes comme des doubles courbures fortement marquées.

Il a ainsi été trouvé que des matériaux polymères dont la structure moléculaire a été modifiée afin de maintenir leurs performances mécaniques tout en diminuant fortement leur viscosité en fondu permettent d'obtenir des articles

composites en utilisant notamment les technologies de moulage en moule fermé LCM (Liquid Composite Molding), technologies habituellement utilisées avec les composites à base de résine thermodurcissable. Les performances mécaniques de ces articles sont similaires à celles obtenues par des techniques conventionnelles de thermoformage, comme le film stacking par exemple.

Le procédé de moulage LCM consiste à injecter de la résine à basse pressions dans un moule généralement fermé dans lequel ont été préalablement placées des fibres de renforcement, longues ou continues, telles que des fibres de verre, de carbone ou d'aramide.

L'écoulement de la résine à travers le renfort placé dans un moule est caractérisé par sa perméabilité K. Cette perméabilité contrôle le débit de résine qui vient imprégner le renfort, selon pàr exemple une loi de Darcy :

$$K = \frac{Q.\eta \Delta l}{A \Delta P}$$

où

- K = perméabilité ($m^2$)
- Q = débit ($m^3.s^{-1}$)
- $\eta$ = viscosité (Pa.s)
- $\Delta$l = longueur d'écoulement (m)
- A = section ($m^2$)
- $\Delta$P = perte de charge (Pa)

La loi de Darcy simplifiée met en relation le débit de résine avec la perméabilité du renfort, la perte de charge, correspondant à la variation de pression dans l'outillage, la viscosité de la résine, la section de la zone d'écoulement, et la longueur d'écoulement.

En augmentant les dimensions de la pièce composite à réaliser, on augmente la longueur d'écoulement, ainsi que la pression à l'intérieur du moule. Une augmentation de l'épaisseur conduit à une réduction sensiblement la pression pour une injection perpendiculaire à la section.

## INVENTION

La demanderesse a découvert de manière inattendue que l'utilisation de polyamides de haute fluidité pour la fabrication d'articles composites permettaient l'obtention d'article présentant de bonnes propriétés mécaniques en utilisant des techniques de moulage en moule fermé LCM (Liquid Composite Molding). Les articles ainsi obtenus présentent une excellente imprégnation ce qui leur confère une bonne rigidité et résistance à la rupture, une bonne résistance aux chocs, et un bon comportement en fatigue, et ceci pour des pressions d'injection relativement faible, typiquement inférieure à 15 bars, de préférence inférieure à 10 bars, et des temps de cycle correspondant au volume de renfort à imprégner, et sans aucun autre traitement pré ou post moulage. Ceci permet de fournir un matériau composite présentant un avantage de réduction de coûts de fabrication, et la fabrication de pièces pouvant présenter des formes relativement complexes, par l'emploi d'un outillage basse pression mettant en oeuvre des temps de cycles courts.

Les articles selon la divulgation présentent notamment les avantages de rigidité, légèreté, et recyclabilité, ainsi qu'un bon aspect de surface, avec la possibilité de présenter des doubles courbures fortement marquées.

La divulgation permet de réaliser des articles de géométrie relativement complexe, le renfort étant introduit soit sous forme d'un assemblage de plis préalablement découpés soit sous forme d'une préforme préalablement formée afin de présenter la géométrie souhaitée.

L'invention a pour premier objet un procédé de fabrication d'un article composite polyamide par moulage par injection comprenant au moins les étapes suivantes :

a) on introduit au moins une étoffe de renfort dans un moule préchauffé présentant une température comprise entre 120 et 350°C, et fermeture de celui-ci ;

b) une étape de montée en température du moule à une température supérieure à 10°C par rapport au point de fusion des polyamides semi-cristallins et à une température supérieure à 10°C par rapport à la température de transition vitreuse pour les polyamides amorphes ;

c) éventuellement une étape de maintien en température du moule avant injection d'une composition polyamide ;

d) une étape d'injection d'une composition polyamide à l'état fondu dans le moule permettant l'écoulement de la résine à travers l'étoffe de renfort ; la composition polyamide à l'état fondu présentant une viscosité fondue $\eta$

comprise entre 0,5 et 30 Pa.s, cette étape suivie du maintien consécutif en température et à une pression comprise entre 0,1 et 10 bar est effectuée dans un temps suffisant selon la géométrie de l'article fabriqué, compris entre 10 secondes et 15 minutes, notamment selon la géométrie de la pièce ;

e) une étape de refroidissement à une température comprise entre 20 et 150°C, effectuée dans un temps compris entre 30 secondes et 10 minutes ; et

f) une étape de récupération de l'article composite obtenu.

On entend notamment par article composite selon la divulgation un matériau comprenant une ossature appelée renfort qui assure la tenue mécanique et d'une matrice thermoplastique qui assure la cohésion de la structure et la retransmission des efforts vers le renfort.

On entend par étoffe, une surface textile obtenue par assemblage de fils ou de fibres solidarisés par un procédé quelconque, tel que notamment collage, feutrage, tressage, tissage, tricotage. Ces étoffes sont aussi désignés comme des réseaux fibreux ou filamenteux. Par fil, on entend un monofilament, un fil multifilamentaire continu, un filé de fibres, obtenu à partir d'un unique type de fibres ou de plusieurs types de fibres en mélange intime. Le fil continu peut être également obtenu par assemblage de plusieurs fils multifilamentaires. Par fibre, on entend un filament ou un ensemble de filaments coupés, craqués ou convertis.

Les fils et/ou fibres de renfort selon l'invention sont préférentiellement choisis parmi les fils et/ou les fibres de carbone, de verre, d'aramides, de polyimides, de lin, de chanvre, de sisal, de coir, de jute, de kenaf et/ou de leur mélange. Plus préférentiellement, les étoffes de renfort sont uniquement constituées de fils et/ou fibres de renfort choisis parmi les fils et/ou les fibres de carbone, de verre, d'aramides, de polyimides, de lin, de chanvre, de sisal, de coir, de jute, de kenaf et/ou de leur mélange.

Ces étoffes ont préférentiellement un grammage, c'est-à-dire le poids au mètre carré, compris entre 100 et 1200 $g/m^2$, plus préférentiellement compris entre 100 1000 $g/m^2$.

Leur structure peut être aléatoire, unidirectionelle (1D), ou multidirectionelle (2D, 2,5D, 3D ou autre).

Il peut être important afin de faciliter l'imprégnation d'utiliser au niveau de l'étoffe de renfort des tissus de drainage qui vont faciliter l'écoulement de la résine et repousser ainsi les limites posées par la loi de Darcy.

Les étoffes de renfort peuvent être préformées notamment en utilisant un liant à base de thermodurcissable ou de thermoplastique.

Le polyamide selon la divulgation présente une viscosité fondue $\eta$ comprise entre 0,5 et 30 Pa.s, de préférence entre 0,5 et 12 Pa.s, plus préférentiellement entre 0,5 et 10 Pa.s. Cette viscosité fondue $\eta$ peut être mesurée à l'aide d'un rhéomètre plan-plan de diamètre 50 mm, sous un balayage en cisaillement par pallier allant de 1 à 160 $s^{-1}$. Le polymère est sous forme de film d'une épaisseur 150 $\mu$m, ou bien de granulés. Le polyamide, lorsqu'il est semi-cristallin, est amené à une température de 30°C au dessus de son point de fusion, et la mesure est alors effectuée. Le polyamide, lorsqu'il est amorphe, est amené à une température de 250°C, et le mesure est alors effectuée.

## POLYAMIDES

Les polyamides peuvent être choisis dans le groupe comprenant les polyamides obtenus par polycondensation d'au moins un diacide carboxylique aliphatique linéaire avec une diamine aliphatique ou cyclique ou entre au moins un diacide carboxylique aromatique et une diamine aliphatique ou aromatique, les polyamides obtenus par polycondensation d'au moins un aminoacide ou lactame sur lui-même, ou leur mélange et (co)polyamides. Les polyamides peuvent notamment être semi-cristallins ou amorphes. Les polyamides semi-cristallins sont particulièrement préférés.

Le polyamide de la divulgation est notamment choisi dans le groupe comprenant les polyamides obtenus par polycondensation d'au moins un diacide carboxylique aliphatique avec une diamine aliphatique ou cyclique comme le PA 6.6, PA 6.10, PA 6.12, PA 12.12, PA 4.6, MXD 6 ou entre au moins un diacide carboxylique aromatique et une diamine aliphatique ou aromatique comme les polytéréphtalamides, polyisophtalamides, polyaramides, ou leur mélange et (co)polyamides. Le polyamide de la divulgation peut aussi être choisi dans les polyamides obtenus par polycondensation d'au moins un aminoacide ou lactame sur lui-même, l'amino-acide pouvant être généré par l'ouverture hydrolytique d'un cycle lactame tels que, par exemple PA 6, PA 7, PA 11, PA 12, ou leur mélange et (co)polyamides.

Des polyamides de haute fluidité peuvent notamment être obtenus en contrôlant leur poids moléculaire lors de leur synthèse, notamment par l'addition avant ou pendant la polymérisation des monomères de polyamide, de monomères modifiant la longueur des chaînes, tel que notamment des diamines, diacides carboxyliques, monoamines et/ou monoacides carboxyliques. Il est également possible d'ajouter à la polymérisation des composés multifonctionnels.

Des polyamides selon la divulgation peuvent aussi être obtenus par mélange, notamment en fondu, de polyamides avec des monomères modifiant la longueur des chaînes, tel que notamment des diamines, diacides carboxyliques, monoamines et/ou monoacides carboxyliques.

La composition de la divulgation peut également comprendre les copolyamides dérivés notamment des polyamides ci-dessus, ou les mélanges de ces polyamides ou (co)polyamides.

La polymérisation du polyamide de la divulgation est notamment réalisée selon les conditions opératoires classiques de polymérisation des polyamides, de manière continue ou discontinue.

On peut utiliser différents types de polyamide présentant la viscosité fondue selon la présente divulgation.

On peut par exemple utiliser des polyamides ayant une masse moléculaire moyenne en nombre (Mn) supérieure à 8000 g/mol, plus préférentiellement comprise entre 8000 g/mol et 20000 g/mol , ayant des propriétés mécaniques suffisantes et une certaine tenue lors des différents procédés de mises en forme.

On peut aussi utiliser des résines polyamides non évolutives de faible masse moléculaire pouvant être obtenues de différentes façons, notamment par déséquilibre de la stoechiométrie des monomères et/ou ajout de composants bloquants (il s'agit de molécules monofonctionnelles appelés également des limiteurs de chaîne, de concentration en groupement terminaux bloquants GTB) lors du procédé de polymérisation ou polycondensation des polyamides ; ou encore par ajout de monomères ou composants bloquants en mélange, notamment en extrusion. La masse moléculaire moyenne en poids Mw de ces résines polyamides est comprise entre 5000 et 25000 g/mol, préférentiellement comprise entre 10000 et 15000 g/mol. La masse moléculaire en poids peut être mesurée par analyse par chromatographie d'exclusion stérique SEC ou GPC du polyamide dans le dichlorométhane après hydrolyse des fonctions amides par l'anhydride trifluoracétique. Les distributions en masses absolues sont obtenues par détection viscosimétrique. Ces polyamides présentent une concentration en groupements terminaux amines (GTA) et/ou en groupements terminaux carboxyliques (GTC) inférieure ou égale à 20 meq/kg. Ces résines sont dites non évolutives dans la mesure où on n'observe pas d'augmentation significative de leur masse moléculaire, ou de degré de polymérisation, lorsque celles-ci sont mises en oeuvre dans le procédé de fabrication d'article composite ; c'est-à-dire dans des conditions de températures et de pressions favorisant normalement une augmentation du poids moléculaire. Cette masse moléculaire n'évolue pratiquement pas lors du procédé de fabrication des articles composites du à l'absence, ou quasi absence, de groupement terminaux acide ou amine. Ces résines sont en ce sens différentes des polymères partiellement polymérisés ou pré-polymères classiquement utilisées.

Ces résines polyamides présentent préférentiellement une concentration en groupements terminaux amines (GTA) et/ou en groupements terminaux carboxyliques (GTC) inférieure ou égale à 20 meq/kg, préférentiellement inférieure ou égale à 15 meq/kg, plus préférentiellement inférieure ou égale à 10 meq/kg, encore plus préférentiellement inférieure ou égale 5 meq/kg, tout particulièrement égale à 0 meq/kg. Un polyamide convenable pour la présente invention peut ainsi présenter par exemple un GTA de 0 meq/kg et un GTC de 500 meq/kg. Un polyamide convenable pour la présente invention peut ainsi présenter par exemple un GTA de 400 meq/kg et un GTC de 0 meq/kg. Un polyamide présentant une concentration en groupements terminaux amines (GTA) inférieure ou égale à 5 meq/kg, présente généralement une concentration en groupements terminaux carboxyliques (GTC) comprise entre 100 et 1000 meq/kg. Un polyamide présentant une concentration en groupements terminaux carboxyliques (GTC) inférieure ou égale à 5 meq/kg, présente généralement une concentration en groupements terminaux amines (GTA) comprise entre 100 et 1000 meq/kg.

Enfin, un polyamide de l'invention peut également présenter un GTA=400 meq/kg, un GTC de 0 meq/kg et une concentration en groupements terminaux bloquants GTB=100 meq/kg.

Les quantités de groupements terminaux amines (GTA) et/ou acides (GTC) peuvent être déterminées par dosage potentiométrique après complète dissolution du polyamide, par exemple dans le trifluoroéthanol, et ajout d'une base forte en excès. Les espèces basiques sont alors titrées par une solution aqueuse d'acide fort.

De telles résines peuvent être fabriquées de nombreuses manières et sont bien connues en soit de l'homme de l'art.

On peut par exemple fabriquer de telles résines par ajout en polymérisation, notamment au début en cours ou en fin de la polymérisation, des monomères du polyamide, en présence en outre de composés difonctionnels et/ou monofonctionnels. Ces composés difonctionnels et/ou monofonctionnels présentent des fonctions amines ou acides carboxyliques capables de réagir avec les monomères du polyamide et sont utilisés dans des proportions telles que la résine polyamide résultante présente préférentiellement un GTA et/ou GTC inférieur à 20 meq/Kg.

Il est également possible de mélanger à un polyamide des composés difonctionnels et/ou monofonctionnels, notamment par extrusion, généralement une extrusion réactive, de façon à obtenir la résine polyamide utilisée selon la présente divulgation.

On peut utiliser tout type d'acides mono- ou di-carboxylique, aliphatiques ou aromatiques ou tous types d'amines mono- ou di-amines, aliphatiques ou aromatiques. On peut notamment utiliser comme composé monofonctionnel la n-dodécylamine et la 4-amino-2,2,6,6-tétraméthylpipéridine, l'acide acétique, l'acide laurique, la benzylamine, l'acide benzoïque, l'acide acétique et l'acide propionique. On peut notamment utiliser comme composé difonctionnel, l'acide adipique, l'acide téréphtalique, l'acide isophtalique, l'acide sébacique, l'acide azélaïque, l'acide dodécanedioïque, l'acide décanedioïque, l'acide pimélique, l'acide subérique, les dimères d'acides gras, la di(β-éthylcarboxy) cyclohexanone, l'hexaméthylène diamine, la méthyl-5 pentaméthylène diamine, la métaxylylène diamine, la butanediamine, l'isophorone diamine, le 1,4 diamino cyclohexane, la 3,3',5-triméthyl hexaméthylènediamine.

On peut également utiliser un excès d'acide adipique ou un excès d'hexaméthylène diamine pour la production d'un polyamide de type 66 présentant une fluidité en fondu élevée et une concentration en groupements terminaux

amines (GTA) et/ou en groupements terminaux carboxyliques (GTC) préférentiellement inférieure à 20 meq/kg.

Il est également possible de fortement diminuer les concentrations en groupements terminaux acides ou amines d'un polyamide en opérant une finition sous vide en fin de polymérisation de manière à éliminer l'eau afin de consommer tout ou pratiquement tous les groupements terminaux ; et ainsi garantir que la résine n'évoluera plus dans le sens de l'augmentation de la masse molaire quelles que soient les conditions de mise en oeuvre du composite, notamment sous pression ou sous vide.

On peut aussi utiliser dans le procédé de la présente invention des résines polyamides bloquées non évolutives de faible masse moléculaire présentant un masse moléculaire moyenne en nombre Mn inférieur à 8000 g/mol et présentant une concentration en groupements terminaux amines (GTA) supérieur à 25 meq/kg, une concentration en groupements terminaux acides (GTC) supérieur à 25 meq/kg et une concentration en groupements terminaux bloqués (GTB) compris selon la formule 2000000/(GTA+GTC+GTB) < 8000 g/mol. Ces polyamides peuvent notamment être fabriqués en ajoutant en polymérisation du polyamide divers monomères mono ou bifonctionnels.

On peut également utiliser comme polyamide de haute fluidité un polyamide étoile comprenant des chaînes macromoléculaires étoiles et le cas échéant des chaînes macromoléculaires linéaires. Le polyamide à structure étoile est un polymère comprenant des chaînes macromoléculaires étoiles, et éventuellement des chaînes macromoléculaires linéaires. Les polymères comprenant de telles chaînes macromoléculaires étoiles sont par exemple décrits dans les documents FR2743077, FR2779730, EP0682057 et EP0832149. Ces composés sont connus pour présenter une fluidité améliorée par rapport à des polyamides linéaires.

Les chaînes macromoléculaires étoiles comportent un coeur et au moins trois branches de polyamide. Les branches sont liées au coeur par une liaison covalente, par l'intermédiaire d'un groupement amide ou d'un groupement d'une autre nature. Le coeur est un composé chimique organique ou organométallique, de préférence un composé hydrocarboné comportant éventuellement des hétéroatomes et auquel sont reliées les branches. Les branches sont des chaînes polyamides. Les chaînes polyamides constituant les branches sont de préférence du type de celles obtenues par polymérisation des lactames ou aminoacides, par exemple de type polyamide 6.

Le polyamide à structure étoile comprend éventuellement, outre les chaînes étoiles, des chaînes polyamide linéaires. Dans ce cas, le rapport en poids entre la quantité de chaînes étoiles et la somme des quantités de chaînes étoiles et de chaînes linéaires est compris entre 0,5 et 1 bornes incluses. Il est de préférence compris entre 0,6 et 0,9.

Selon un mode de réalisation préférentiel de la divulgation, le polyamide à structure étoile, c'est-à-dire comprenant des chaînes macromoléculaires étoiles, est obtenu par copolymérisation d'un mélange de monomères comprenant au moins :

a) des monomères de formule générale (I) suivante :

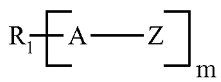 (I)

b) des monomères de formules générales (IIa) et (IIb) suivantes :

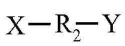 (IIa) ou 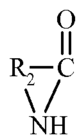 (IIb)

c) éventuellement des monomères de formule générale (III) suivante :

Z-R3-Z (III)

dans lesquelles :

- R1 est un radical hydrocarboné comprenant au moins 2 atomes de carbone, linéaire ou cyclique, aromatique ou aliphatique et pouvant comprendre des hétéroatomes,
- A est une liaison covalente ou un radical hydrocarboné aliphatique pouvant comprendre des hétéroatomes et comprenant de 1 à 20 atomes de carbone,
- Z représente une fonction amine primaire ou une fonction acide carboxylique,
- Y est une fonction amine primaire quand X représente une fonction acide carboxylique, ou Y est une fonction acide carboxylique quand X représente une fonction amine primaire,

- R2, R3 identiques ou différents représentent des radicaux hydrocarbonés aliphatiques, cycloaliphatiques ou aromatiques substitués ou non comprenant de 2 à 20 atomes de carbone et pouvant comprendre des hétéroatomes,
- m représente un nombre entier compris entre 3 et 8.

Par acide carboxylique, on entend les acides carboxyliques et leurs dérivés, tels que les anhydrides d'acide, les chlorures d'acide, ou les esters.

Des procédés d'obtention de ces polyamides étoiles sont décrits dans les documents FR2743077 et FR2779730. Ces procédés conduisent à la formation de chaînes macromoléculaires étoiles, en mélange avec éventuellement des chaînes macromoléculaires linéaires.

Si on utilise un comonomère de formule (III), la réaction de polymérisation est avantageusement effectuée jusqu'à l'atteinte de l'équilibre thermodynamique.

Le monomère de formule (I) peut également être mélangé à un polymère en fondu, au cours d'une opération d'extrusion.

Ainsi, selon un autre mode de réalisation de la divulgation, le polyamide à structure étoile est obtenu par mélange en fondu, par exemple à l'aide d'un dispositif d'extrusion, d'un polyamide du type de ceux obtenus par polymérisation des lactames et/ou des aminoacides et d'un monomère de formule (I). De tels procédés d'obtention sont décrits dans les brevets EP0682070 et EP0672703.

Selon une caractéristique particulière de la divulgation, le radical $R_1$ est soit un radical cycloaliphatique tel que le radical tétravalent de cyclohexanonyle, soit un radical 1,1,1-triyle-propane, 1,2,3-triyle-propane. Comme autre radicaux R1 convenables pour l'invention on peut citer à titre d'exemple, les radicaux trivalents de phényle et cyclohexanyle substitués ou non, les radicaux tétravalents de diaminopolyméthylène avec un nombre de groupes méthylène compris avantageusement entre 2 et 12 tels que le radical provenant de l'EDTA (acide éthylène diamino tétracétique), les radicaux octovalents de cyclohexanonyle ou cyclohexadinonyle, et les radicaux provenant de composés issus de la réaction des polyols tels que glycol, pentaérythritol, sorbitol ou mannitol avec l'acrylonitrile.

Avantageusement, au moins deux radicaux $R_2$ différents peuvent être employés dans les monomères de formule (II).

Le radical A est, de préférence, un radical méthylénique ou polyméthylénique tel que les radicaux éthyle, propyle ou butyle ou un radical polyoxyalkylènique tel que le radical polyoxyéthylènique.

Selon un mode de réalisation particulier de la divulgation, le nombre m est supérieur ou égal à 3 et avantageusement égal à 3 ou 4.

La fonction réactive du composé multifonctionnel représentée par le symbole Z est une fonction capable de former une fonction amide.

De préférence, le composé de formule (I) sont choisis parmi la 2,2,6,6-tétra-(β-carboxyéthyl)-cyclohexanone, l'acide trimésique, la 2,4,6-tri-(acide aminocaproique)-1,3,5-triazine et la 4-aminoéthyle-1,8-octanediamine.

Le mélange de monomères à l'origine des chaînes macromoléculaires étoiles peut comporter d'autres composés, tels que des limiteurs de chaînes, des catalyseurs, des additifs, tels que des stabilisants lumière, des stabilisants thermiques.

Le polyamide de la divulgation peut également comprendre des motifs hydroxyaromatiques chimiquement liés à la chaîne du polyamide. On utilise pour ce faire un composé organique hydroxyaromatique qui est un composé comportant au moins un groupement hydroxyle aromatique et au moins une fonction capable de se lier chimiquement aux fonctions acides ou amines du polyamide, qui une fois chimiquement lié à la chaîne polyamide, devient un motif hydroxyaromatique. Ce composé est de préférence choisi dans le groupe comprenant : l'acide 2-hydroxytéréphtalique, l'acide 5-hydroxyisophtalique, l'acide 4-hydroxyisophtalique, l'acide 2,5-dihydroxytéréphtalique, l'acide 4-hydroxyphénylacétique ou l'acide gallique, la L-Tyrosine, l'acide 4-hydroxyphénylacétique, le 3,5-diaminophénol, le 5-hydroxy m-xylylène diamine, l'amino-3 phénol, l'amino-3 méthyl-4 phénol, et l'acide hydroxy-3 amino-5 benzoïque.

## COMPOSITION POLYAMIDE

La composition polyamide et/ou l'article composite selon la divulgation peuvent également comprendre tous les additifs habituellement utilisés dans les compositions à base de polyamide utilisées pour la fabrication d'articles. Ainsi, on peut citer à titre d'exemple d'additifs les stabilisants thermiques, les stabilisants UV, les antioxydants, les lubrifiants, les pigments, les colorants, les plastifiants, les charges de renfort, les agents ignifugeants et les agents modifiant la résistance aux chocs.

La composition peut notamment comprendre de la résine novolac. La composition polyamide comprend préférentiellement de 5 à 25 % en poids de résine novolac, par rapport au poids total de la composition. Le pourcentage en poids est représenté par rapport au poids total de la composition. Les résines novolac sont généralement des produits de condensation de composés phénoliques avec des aldéhydes ou cétones ou leurs dérivés comme les fonctions cétals

ou hémicétals. Ces réactions de condensation sont généralement catalysées par un acide ou une base.

Des additifs pour améliorer la qualité des interfaces étoffes de renfort polyamide peuvent également être utilisés. Ces additifs peuvent être par exemple incorporés à la composition polyamide, incorporés dans les fils et/ou fibres de l'étoffe de renfort, présents sur les fils et/ou fibres de ladite étoffe, ou encore déposés sur l'étoffe de renfort. Ces additifs peuvent être des agents de couplage tels que ceux de type aminosilanes ou chlorosilanes dans le cas du verre, de type anhydride maléique, polyvinylpyrolidone ou epoxy dans le cas du carbone, ou encore des agents fluidifiants ou mouillants, ou leur association.

Des charges renforçantes, notamment dites "finée", peuvent être incorporées à la composition polyamide. Ces charges peuvent être choisies parmi les charges fibreuses, tels que des fibres de verre courtes par exemple, ou des charges non fibreuses tels que le kaolin, le talc, la silice, le mica ou la wollastonite. Leur taille est généralement comprise entre 0,1 et 50 $\mu$m, de préférence entre 0,1 et 25 $\mu$m, plus préférentiellement entre 0,1 et 20 $\mu$m, encore plus préférentiellement entre 0,1 et 5 $\mu$m. Des charges sub-microniques voire nanométriques peuvent également être utilisées, seules ou en complément des autres charges.

La présente divulgation concerne un article susceptible d'être obtenu par le procédé de l'invention. L'article peut notamment être un article composite à base de polyamide comprenant une étoffe de renfort, dans lequel le polyamide présente une viscosité fondue $\eta$ comprise entre 0,5 et 30 Pa.s, préférentiellement entre 0,5 et 12 Pa.s, encore plus préférentiellement entre 0,5 et 10 Pa.s.

Les articles selon la divulgation comprennent préférentiellement entre 25 et 65 % en volume d'étoffe de renfort par rapport au volume total, plus préférentiellement entre 35 et 65 %.

## PROCEDE

Le cycle de production d'article composite par moulage par injection basse pression selon l'invention comprend ainsi l'introduction d'au moins une étoffe de renfort dans un moule généralement préchauffé, une étape de montée en température du moule au dessus du point de fusion du polymère, une étape de maintien en température, une étape d'injection et d'imprégnation de l'étoffe de renfort comprise dans le moule à basse pression, une étape de refroidissement rapide et enfin une étape de récupération de l'article composite obtenu. Ces étapes sont bien connues de l'homme du métier au fait du moulage par injection basse pression de composites à matrice thermodure. Ces étapes peuvent être réalisés uniquement sous pression, ou bien avec l'assistance d'une mise sous vide, ou encore par dépression le polymère fondu n'étant pas poussé mais tiré au sein de l'étoffe de renfort. L'écoulement du polymère fondu peut se faire soit parallèlement au plan des plis de renfort, soit perpendiculairement au plis de renfort. Les points d'injection ainsi que les évents sont adaptés en fonction de la géométrie de l'article et de la configuration du moule. Il est possible de prévoir des moyens de dégazage également.

Dans un premier temps, une étoffe de renfort est placée dans un moule préchauffé, ou chambre de moulage, et le moule est ensuite fermé. Une ou plusieurs étoffes peuvent être mises dans un même moule. Plusieurs moules peuvent être utilisés en même temps. Il est possible que l'étoffe de renfort soit placée dans le moule après avoir préalablement été chauffée pour obtenir une température adéquate pour la suite du procédé de l'invention. On peut également placer dans le moule des inserts métalliques ou composite en même temps que l'étoffe de renfort.

Le moule est amené et maintenu à une température généralement supérieure au point de fusion du polymère par divers moyens connus, tel que le chauffage par effet joule (résistances ou cartouches chauffantes) par exemple, la circulation de fluide caloporteur, ou l'induction magnétique haute-fréquence. Ce procédé est connu également sous le nom de procédé de moulage par transfert de résine (RTM) en procédé thermodure, qui consiste à injecter de la résine dans un moule fermé dans lequel ont été préalablement placées des fibres de renforcement. Ce procédé est généralement réalisé sous basse pression, voire à pression nulle.

On peut par exemple injecter la composition polyamide en fondu dans une chambre de moulage comprenant au moins une ou plusieurs étoffes de renfort.

L'étape b) de montée en température du moule peut être effectuée dans un temps compris entre 30 secondes et 30 minutes, préférentiellement entre 30 secondes et 10 minutes, notamment entre 30 secondes et 5 minutes. La température est préférentiellement comprise entre 10 et 50°C au dessus du point de fusion des polyamides semi-cristallins, plus préférentiellement entre 15 et 40°C, encore plus préférentiellement entre 20 et 40°C. La température est préférentiellement comprise entre 10 et 50°C au dessus du point de transition vitreuse des polyamides amorphes, plus préférentiellement entre 15 et 40°C, encore plus préférentiellement entre 20 et 40°C. Cette température est préférentiellement maintenue pour les étapes c) et d). Cette étape b) est effectuée dans un temps le plus court possible selon la technologie de chauffage utilisée.

L'étape c) de maintien en température du moule avant injection basse pression d'une composition polyamide est éventuelle selon le procédé utilisé. Préférentiellement le temps de cette étape est compris entre 10 secondes et quelques minutes.

L'étape d) est préférentiellement effectuée selon un temps dépendant de la géométrie de l'article à réaliser et

la configuration du moule, notamment dans un temps compris entre 15 secondes et 2 minutes, ou encore entre 1 minute et 15 minutes. Le débit de la résine doit être contrôlé et adapté aux conditions de procédé, notamment la pression appliquée et la perméabilité de l'étoffe. Cette étape est réalisée afin d'assurer une parfaite imprégnation du renfort, notamment sans microporosité ou macroporosité ; éventuellement par un pompage de la résine à travers l'étoffe de renfort. Une mise sous vide partiel du moule peut également être utilisée, afin de faciliter l'élimination des bulles et porosités.

L'étape d'imprégnation du polyamide de haute fluidité et de l'étoffe de renfort peut être réalisée de diverses manières, selon divers procédés possibles de moulage. On peut par exemple procéder à un moulage par injection basse pression en utilisant directement une extrudeuse monovis à débit contrôlé ou bien par l'intermédiaire d'une chambre préalablement chargée en polymère fondu par l'extrudeuse puis introduction du polymère fondu dans le moule par mise sous pression de la dite chambre, la gamme de pression utilisée étant généralement inférieure ou égale à 15 bar, plus préférentiellement inférieure à 10 bar. On peut aussi amener le polyamide à l'état fondu dans le moule par tout autre moyen, par exemple une pompe notamment à engrenage correspondant au domaine de pression souhaité.

L'écoulement de la résine à l'état fondu à travers l'étoffe de renfort est préférentiellement effectuée avec un débit compris entre 5 $cm^3$/min et 350 $cm^3$/min.

Après l'imprégnation de l'étoffe de renfort par le polyamide, l'article est obtenu par refroidissement de l'ensemble conduisant à une solidification de la matrice. Le refroidissement peut avantageusement être effectué rapidement de façon à éviter une cristallisation importante du polyamide, notamment pour maintenir les propriétés de l'article. Le moule peut par exemple être refroidit par un circuit de fluide froid.

L'étape de refroidissement e) est préférentiellement effectuée dans un temps compris entre 1 minute et 10 minutes.

## ARTICLE

La présente divulgation concerne aussi un article composite susceptible d'être obtenu par le procédé selon la présente invention. Les articles de la divulgation peuvent être des articles finis, ou semi-finis tels que des insert de surmoulage.

Les articles composites peuvent être employées dans de nombreux domaines tels que l'aéronautique, l'automobile, l'industrie de l'énergie, l'industrie des sports et loisirs. Ces structures peuvent être utilisées pour réaliser des articles de sports ou bien pour réaliser des surfaces diverses telles que des planchers spéciaux, des cloisons, des éléments de carrosserie de véhicules, ou des panneaux. Dans l'aéronautique ces structures sont utilisées notamment au niveau des carénages (fuselage, aile, empennage). Dans l'automobile, elles sont utilisées par exemple au niveau des planchers ou des supports tels que les plaques avant ou les tablettes arrières.

Un langage spécifique est utilisé dans la description de manière à faciliter la compréhension du principe de l'invention. Il doit néanmoins être compris qu'aucune limitation de la portée de l'invention n'est envisagée par l'utilisation de ce langage spécifique. Des modifications, améliorations et perfectionnements peuvent notamment être envisagés par une personne au fait du domaine technique concerné sur la base de ses propres connaissances générales.

Le terme et/ou inclut les significations et, ou, ainsi que toutes les autres combinaisons possibles des éléments connectés à ce terme.

D'autres détails ou avantages de l'invention apparaîtront plus clairement au vu des exemples donnés ci-dessous uniquement à titre indicatif.

## PARTIE EXPERIMENTALE

### Exemple 1

Les composés utilisés sont les suivants :

- Etoffe de renfort Taffetas de grammage 600 g/$m^2$ (équilibré 0/90) en fibres de verre
- Polyamide 66 IV 50 (ISO 307 acide formique) ayant une viscosité en fondu de 2,5 Pa.s

Le taux de fibres visé est de 50 % volumique.

On effectue un procédé de moulage par injection basse pression à l'aide d'un dispositif constitué d'une extrudeuse monovis HpB de diamètre 22/25D et d'un moule permettant de réaliser des plaques de dimensions 200x300x2 mm ou 200x300x5 mm. L'extrudeuse de diamètre 22/25D, installée sur un châssis alimente un bloc de distribution de matière et un pot transfert d'une capacité de 250 cm3 relié par une ligne de fondu. Le pot transfert, équipé d'un piston animé par un système roue et vis sans fin motorisé par un motoréducteur avec variateur de vitesse, permet d'alimenter le moule (moule instrumenté TechniModul et calorifugé) avec un débit contrôlé ce qui n'est pas possible en sortie directe

de l'extrudeuse. L'ensemble des parties chaudes est totalement cartérisé pour une bonne isolation et régulation thermique.

L'extrudeuse monovis rempli le pot transfert de la quantité de matière nécessaire à l'opération et, ce dernier, sous le contrôle d'un automate, transfert la matière dans le moule avec des conditions d'injection préalablement paramétrées (débit, pression, et température).

Le moule est équipé d'un système chauffant (cartouches chauffantes insérées dans la masse d'une puissance de 4 kW) et d'un circuit de refroidissement (eau froide sous pression). Divers capteurs sont également utilisés, afin de piloter le procédé : pression entrée, pression sortie, température, débit.

Dans un premier essai, l'étoffe est placée dans le moule préalablement chauffé qui est alors porté à une température de 290°C en quelques minutes (étape b), le maintien en température à 290°C dure alors 1 minute (étape c), puis injection du polymère sous une pression de 5 bars environ avec un débit de 60 $cm^3$/min jusqu'à ce que la cavité contenant l'étoffe soit totalement remplie (étape d), le débit d'injection est alors stoppé et le moule est maintenu en température pendant 90 secondes. Le chauffage est coupé et la température descend alors en quelques minutes sous l'effet de la circulation d'eau froide pour atteindre un niveau vers 100°C (étape e). L'article composite est alors récupéré.

Dans un deuxième essai, l'étoffe est placée dans le moule qui est chauffé à une température de 290°C en quelques minutes (étape b), il n'y a pas d'étape c) de maintien en température, et l'on procède à l'injection de la composition polyamide dans le moule sous une pression de 8 bar et un débit de 105 $cm^3$/min et l'on maintien la température à 290°C pendant 1 minute. Le chauffage est coupé et la température descend alors en 2 minutes pour atteindre la valeur de 100°C (étape e). L'article composite est alors récupéré.

Dans un troisième essai, l'étoffe est placée dans le moule qui est chauffé à une température de 290°C en quelques minutes (étape b), le maintien en température à 290°C dure alors 5 minutes (étape c), après l'injection sous une pression de 8 bar et un débit de 105 $cm^3$/min le moule est encore maintenu en température pendant 2 minutes. Le chauffage est coupé et la température descend alors en 2 minutes pour atteindre la valeur de 100°C (étape e). L'article composite est alors récupéré.

On obtient ainsi des articles composites dans lesquels l'étoffe de renfort est complètement imprégnée dans la matrice polyamide et présente de bonnes propriétés mécaniques et un excellent aspect de surface. Les articles ne présentent aucun voilage.

**Exemple 2** :

Les composés utilisés sont les suivants :

- Etoffe de renfort présentant une perméabilité adaptée : Injectex verre poudré epoxy.
- Polyamide 66 d'indice de viscosité IV 51 (ISO 307 acide formique) ayant une viscosité en fondu de 3 à 5 Pa.s

Le taux de fibres visé est de 50% volumique.

On effectue un procédé de moulage par injection basse pression à l'aide d'un dispositif constitué d'une extrudeuse monovis et d'un moule permettant de réaliser des plaques de dimensions 200x300x4 mm ou 200x300x6 mm. L'extrudeuse alimente un bloc de distribution de matière et un pot transfert d'une capacité de 250 cm3 relié par une ligne de fondu. Le pot transfert, équipé d'un piston animé par un système roue et vis sans fin motorisé par un motoréducteur avec variateur de vitesse, permet d'alimenter le moule (moule instrumenté, et calorifugé) avec un débit contrôlé ce qui n'est pas possible en sortie directe de l'extrudeuse. L'ensemble des parties chaudes est totalement cartérisé pour une bonne isolation et régulation thermique.

L'extrudeuse monovis rempli le pot transfert de la quantité de matière nécessaire à l'opération et, ce dernier, sous le contrôle d'un automate, transfert la matière dans le moule avec des conditions d'injection préalablement paramétrées (débit, pression, et température).

Le moule est équipé d'un système chauffant (cartouches chauffantes insérées dans la masse d'une puissance de 5 kW) et d'un circuit de refroidissement (eau froide). Divers capteurs sont également utilisés, afin de piloter le procédé : pression entrée, pression sortie, température, débit.

Dans un premier essai, l'étoffe est placée dans le moule préalablement chauffé qui est alors fermé et porté à une température de 275°C en quelques minutes (étape b), le maintien en température à 275°C dure alors 1 minute (étape c), puis injection du polymère sous une pression de 5 bars environ avec un débit de 60 cm3/min jusqu'à ce que la cavité contenant l'étoffe soit totalement remplie (étape d), le débit d'injection est alors stoppé et le moule est maintenu en température pendant 90 secondes. Le chauffage est coupé et la température descend alors rapidement sous l'effet de la circulation d'eau froide pour atteindre un niveau vers 125°C (étape e). L'article composite est alors récupéré.

Dans un deuxième essai, l'étoffe est placée dans le moule qui est chauffé à une température de 280°C en quelques minutes (étape b), il n'y a pas d'étape c) de maintien en température, et l'on procède à l'injection de la composition polyamide dans le moule sous une pression de 8 bars et un débit de 105 $cm^3$/min, et l'on maintien la

température à 280°C pendant 1 minute. Le chauffage est coupé et la température descend alors rapidement pour atteindre la valeur de 125°C (étape e). L'article composite est alors récupéré.

Dans un troisième essai, l'étoffe est placée dans le moule qui est chauffé à une température de 280°C en quelques minutes (étape b), le maintien en température à 280°C dure alors 5 minutes (étape c), après l'injection sous une pression de 8 bars et un débit de 105 $cm^3$/min le moule est encore maintenu en température pendant 2 minutes. Le chauffage est coupé et la température descend alors rapidement pour atteindre la valeur de 125°C (étape e). L'article composite est alors récupéré.

On obtient ainsi des articles composites dans lesquels l'étoffe de renfort est complètement imprégnée dans la matrice polyamide et présente de bonnes propriétés mécaniques et un excellent aspect de surface. L'observation microscopique électronique a balayage permet d'observer un niveau très faible de porosité résiduel, notamment inférieur à 0,5 % du volume. L'imprégnation des mèches de filaments de l'étoffe parallèles au sens de l'écoulement est parfaite et l'imprégnation des mèches perpendiculaires au sens de l'écoulement est sensible au débit de la résine polyamide.

## Revendications

**1.** Procédé de fabrication d'un article composite polyamide par moulage par injection comprenant au moins les étapes suivantes :

a) on introduit au moins une étoffe de renfort dans un moule préchauffé présentant une température comprise entre 120 et 350°C, et fermeture de celui-ci ;
b) une étape de montée en température du moule à une température supérieure à 10°C par rapport au point de fusion des polyamides semi-cristallins et à une température supérieure à 10°C par rapport à la température de transition vitreuse pour les polyamides amorphes ;
c) éventuellement une étape de maintien en température du moule avant injection d'une composition polyamide ;
d) une étape d'injection d'une composition polyamide à l'état fondu dans le moule permettant l'écoulement de la résine à travers l'étoffe de renfort ; la composition polyamide à l'état fondu présentant une viscosité fondue $\eta$ comprise entre 0,5 et 30 Pa.s, mesurée à l'aide d'un rhéomètre plan-plan d=50mm, sous un balayage de cisaillement par pallier allant de 1 à 160 1/s, le polymère étant sous forme de film d'une épaisseur 150$\mu$m ou de granulés et les mesures étant éffectuées à 30°C au dessus du point de fusion des polyamides semi-cristallins et à une température de 250°C pour des polyamides amorphes; cette étape suivie du maintien consécutif en température et à une pression comprise entre 0,1 et 10 bar est effectuée dans un temps suffisant selon la géométrie de l'article fabriqué, compris entre 10 secondes et 15 minutes ;
e) une étape de refroidissement à une température comprise entre 20 et 150°C, effectuée dans un temps compris entre 30 secondes et 10 minutes ; et
f) une étape de récupération de l'article composite obtenu.

**2.** Procédé selon la revendication 1, **caractérisé en ce que** l'étoffe de renfort est chauffée avant son introduction dans le moule à l'étape a).

**3.** Procédé selon les revendications 1 ou 2, **caractérisé en ce que** l'étape b) de montée en température du moule préchauffé est effectuée dans un temps compris entre 30 secondes et 10 minutes.

**4.** Procédé selon l'une quelconque des revendications 1 à 3, **caractérisé en ce que** l'étape d) est effectuée dans un temps compris entre 15 secondes et 2 minutes.

**5.** Procédé selon l'une quelconque des revendications 1 à 4, **caractérisé en ce que** l'article composite comprenne entre 25 et 65 % en volume d'étoffe de renfort par rapport au volume total.

**6.** Procédé selon l'une quelconque des revendications 1 à 5, **caractérisé en ce que** le polyamide présente une concentration en groupements terminaux amines GTA et/ou en groupements terminaux carboxyliques GTC inférieure ou égale à 20 meq/kg.

**7.** Procédé selon l'une quelconque des revendications 1 à 5, **caractérisé en ce que** le polyamide est un polyamide bloqué présentant une concentration en groupements terminaux amines GTA supérieur à 25 meq/kg, une concentration en groupements terminaux carboxyliques GTC supérieur à 25 meq/kg et une concentration en groupements terminaux bloqués GTB compris selon la formule 2000000/(GTA+GTC+GTB) < 8000 g/mol.

**8.** Procédé selon l'une quelconque des revendications 1 à 5, **caractérisé en ce que** le polyamide est un polyamide étoile comprenant des chaînes macromoléculaires étoiles et le cas échéant des chaînes macromoléculaires linéaires.

## Patentansprüche

**1.** Verfahren zur Herstellung eines Polyamid-Verbundartikels durch Spritzgießen, das mindestens folgende Schritte umfasst:

a) mindestens ein Verstärkungsstoff wird in eine vorgewärmte Form mit einer Temperatur zwischen 120 und 350°C eingebracht, und Schließen derselben;
b) einen Schritt zum Aufheizen der Form auf eine Temperatur von mehr als 10°C über dem Schmelzpunkt der teilkristallinen Polyamide und auf eine Temperatur von mehr als 10°C über der Glasübergangstemperatur bei amorphen Polyamiden;
c) gegebenenfalls einen Schritt zum Beibehalten der Temperatur der Form vor dem Einspritzen einer Polyamidzusammensetzung;
d) einen Schritt zum Einspritzen einer Polyamidzusammensetzung im geschmolzenen Zustand in die Form, wodurch das Fließen des Harzes durch den Verstärkungsstoff ermöglicht wird; wobei die Polyamidzusammensetzung im geschmolzenen Zustand eine Schmelzviskosität $\eta$ zwischen 0,5 und 30 Pa·s aufweist, gemessen mithilfe eines Platte-Platte-Rheometers d=50 mm, bei einem schrittweisen Schergeschwindigkeitsdurchlauf von 1 bis 160 1/s, wobei das Polymer in Form eines Films mit einer Dicke von 150 $\mu$m oder von Granulat vorliegt und die Messungen bei 30°C über dem Schmelzpunkt der teilkristallinen Polyamide und bei einer Temperatur von 250°C bei amorphen Polyamiden vorgenommen werden,; wobei dieser Schritt, auf den ein darauf folgendes Beibehalten der Temperatur und eines Drucks zwischen 0,1 und 10 bar folgt, in einer entsprechend der Geometrie des hergestellten Artikels ausreichenden Zeit zwischen 10 Sekunden und 15 Minuten vorgenommen wird;
e) einen Schritt zum Abkühlen auf eine Temperatur zwischen 20 und 150°C, der in einer Zeit zwischen 30 Sekunden und 10 Minuten durchgeführt wird; und
f) einen Schritt zum Gewinnen des erhaltenen Verbundartikels.

**2.** Verfahren nach Anspruch 1, **dadurch gekennzeichnet, dass** der Verstärkungsstoff vor seiner Einbringung in die Form in Schritt a) erwärmt wird.

**3.** Verfahren nach Anspruch 1 oder 2, **dadurch gekennzeichnet, dass** Schritt b) zum Aufheizen der vorgewärmten Form in einer Zeit zwischen 30 Sekunden und 10 Minuten vorgenommen wird.

**4.** Verfahren nach einem der Ansprüche 1 bis 3, **dadurch gekennzeichnet, dass** Schritt d) in einer Zeit zwischen 15 Sekunden und 2 Minuten vorgenommen wird.

**5.** Verfahren nach einem der Ansprüche 1 bis 4, **dadurch gekennzeichnet, dass** der Verbundartikel bezogen auf das Gesamtvolumen zwischen 25 und 65 Volumen-% Verstärkungsstoff umfasst.

**6.** Verfahren nach einem der Ansprüche 1 bis 5, **dadurch gekennzeichnet, dass** das Polyamid eine Konzentration an endständigen Aminogruppen GTA und/oder an endständigen Carbonsäuregruppen GTC von kleiner gleich 20 mÄq/kg aufweist.

**7.** Verfahren nach einem der Ansprüche 1 bis 5, **dadurch gekennzeichnet, dass** das Polyamid ein blockiertes Polyamid mit einer Konzentration an endständigen Aminogruppen GTA von über 25 mÄq/kg, einer Konzentration an endständigen Carbonsäuregruppen GTC von über 25 mÄq/kg und einer Konzentration an endständigen blockierten Gruppen GTB entsprechend der Formel 2000000/(GTA+GTC+GTB) < 8000 g/mol aufweist.

**8.** Verfahren nach einem der Ansprüche 1 bis 5, **dadurch gekennzeichnet, dass** das Polyamid ein sternförmiges Polyamid ist, das sternförmige Makromolekülketten und gegebenenfalls unverzweigte Makromolekülketten umfasst.

## Claims

**1.** Process for the manufacture of a polyamide composite article by injection moulding, comprising at least the following steps:

a) at least one reinforcing cloth is introduced into a preheated mould exhibiting a temperature of between 120 and 350°C, and the mould is closed;
b) a step of rise in temperature of the mould to a temperature greater than 10°C with respect to the melting point of the semicrystalline polyamides and to a temperature greater than 10°C with respect to the glass transition temperature for the amorphous polyamides;
c) optionally a step of temperature maintenance of the mould before injection of a polyamide composition;
d) a step of injection of a molten polyamide composition into the mould making possible the flow of the resin through the reinforcing cloth; the molten polyamide composition exhibiting a melt viscosity $\eta$ of between 0.5 and 30 Pa.s, measured using a plate-plate rheometer d=50 mm, under a stepwise shear sweep ranging from 1 to 160 1/s, the polymer being in the form of a film with a thickness of 150 $\mu$m or of granules and the measurements being carried out at 30°C above the melting point of the semicrystalline polyamides and at a temperature of 250°C for amorphous polyamides; this step, followed by the consecutive maintenance of temperature and at a pressure of between 0.1 and 10 bar, is carried out in a sufficient time, according to the geometry of the article manufactured, of between 10 seconds and 15 minutes;
e) a step of cooling to a temperature of between 20 and 150°C, carried out in a time of between 30 seconds and 10 minutes; and
f) a step of recovery of the composite article obtained.

2. Process according to Claim 1, **characterized in that** the reinforcing cloth is heated before it is introduced into the mould in step a).

3. Process according to Claim 1 or Claim 2, **characterized in that** step b) of rise in temperature of the preheated mould is carried out in a time of between 30 seconds and 10 minutes.

4. Process according to any one of Claims 1 to 3, **characterized in that** step d) is carried out in a time of between 15 seconds and 2 minutes.

5. Process according to any one of Claims 1 to 4, **characterized in that** the composite article comprises between 25% and 65% by volume of reinforcing cloth, with respect to the total volume.

6. Process according to any one of Claims 1 to 5, **characterized in that** the polyamide exhibits a concentration of amine end groups AEGs and/or of carboxylic end groups CEGs of less than or equal to 20 meq/kg.

7. Process according to any one of Claims 1 to 5, **characterized in that** the polyamide is a blocked polyamide exhibiting a concentration of amine end groups AEGs of greater than 25 meq/kg, a concentration of carboxylic end groups CEGs of greater than 25 meq/kg and a concentration of blocked end groups BEGs understood according to the formula 2 000 000/(AEGs + CEGs + BEGs) < 8000 g/mol.

8. Process according to any one of Claims 1 to 5, **characterized in that** the polyamide is a star polyamide comprising star macromolecular chains and, if appropriate, linear macromolecular chains.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 2008155318 A
- FR 2743077
- FR 2779730
- EP 0682057 A
- EP 0832149 A
- EP 0682070 A
- EP 0672703 A